Europäisches Patentamt

European Patent Office

Office européen des brevets

(19)

(11) Veröffentlichungsnummer: **0 209 016**
**B1**

(12) **EUROPÄISCHE PATENTSCHRIFT**

(45) Veröffentlichungstag der Patentschrifft:
07.02.90

(21) Anmeldenummer: 86109138.7

(22) Anmeldetag: 04.07.86

(51) Int. Cl. ⁵: **C 25 D 17/28, B 65 G 49/04**

(54) Einrichtung zur elektrolytischen Oberflächenbehandlung von schüttfähigem Gut.

(30) Priorität: 09.07.85 DE 3524510
15.05.86 DE 3616436

(43) Veröffentlichungstag der Anmeldung:
21.01.87 Patentblatt 87/04

(45) Bekanntmachung des Hinweises auf die Patenterteilung:
07.02.90 Patentblatt 90/06

(84) Bennante Vertragsstaaten:
AT BE CH DE FR GB IT LI NL SE

(56) Entgegenhaltungen:
EP-A-209 005
EP-A-209 015
EP-A-209 766
EP-A-211 239
CH-A-594 072
FR-A-1 201 213
US-A-3 649 490

**Die Akte enthält technische Angaben, die nach dem Eingang der Anmeldung eingereicht wurden und die nicht in dieser Patentschrift enthalten sind.**

(73) Patentinhaber: **Siemens Aktiengesellschaft**
**Wittelsbacherplatz 2**
**D-8000 München 2 (DE)**

(72) Erfinder: **Birkle, Siegfried, Dr.**
**Veit-Stoss-Strasse 46**
**D-8552 Höchstadt/Aisch (DE)**
Erfinder: **Gehring, Johann**
**Hohe Warte 2**
**D-8521 Spardorf (DE)**

2

### Beschreibung

Die Erfindung betrifft eine Einrichtung zur elektrolytischen Oberflächenbehandlung von schüttfähigem Gut, insbesondere zum galvanischen Abscheiden von Aluminium aus aprotischem, sauerstoff- und wasserfreien, aluminiumorganischen Elektrolyten.

Eine ähnlich aufgebaute Behandlungseinrichtung für schüttfähiges Gut, die insbesondere zum Aktivieren, Beizen, Entfetten, Spülen und Reinigen von schüttfähigem Gut in der Galvanotechnik eingesetzt wird, ist Gegenstand der den gleichen Altersrang aufweisenden europäischen Patentanmeldung Nr. 86 109 067.8 entsprechend der EP-A-0 211 239.

Aus aprotischen, sauerstoff- und wasserfreien, aluminiumorganischen Elektrolyten abgeschiedenes Aluminium zeichnet sich durch seine Duktilität, Porenarmut, Korrosionsfestigkeit und Eloxierfähigkeit aus. Da der Zutritt von Luft durch Reaktion mit Luftsauerstoff und Luftfeuchtigkeit eine erhebliche Verringerung der Leitfähigkeit und der Lebensdauer dieser Elektrolyten bewirkt, muß das Galvanisieren in einer unter Luftabschluß arbeitenden Behandlungseinrichtung vorgenommen werden. Damit auch beim Be- und Entladen dieser unter Luftabschluß arbeitenden Behandlungseinrichtungen der Zutritt von Luft verhindert werden kann, sind außerdem Ein- und Ausfuhrschleusen erforderlich, die als Gasschleusen, als Flüssigkeitsschleusen oder als kombinierte Gas-Flüssigkeits-Schleusen ausgebildet und mit Fördermitteln zum Durchschleusen des zu behandelnden Gutes ausgerüstet sind.

Aus der EP-PS-0 070 011 ist eine Einrichtung für das elektrolytische Abscheiden von Metall bekannt, bei welcher schüttfähiges Galvanisiergut über eine mit Fördermitteln versehene Eingangsstation in eine drehbar in der Galvanisierwanne angeordnete Galvanisiertrommel eingebracht und nach dem Durchlaufen der auf ihrer Innenwandung mit einer Förderschnecke versehenen Galvanisiertrommel über eine ebenfalls mit Fördermitteln versehene Ausgangsstation wieder ausgetragen wird. Die mit einer Perforation versehene Galvanisiertrommel ist dabei als Kathode geschaltet, während die Anode im Innern der Galvanisiertrommel angeordnet ist. Für das galvanische Abscheiden von Aluminium aus sauerstoff- und wasserfreien aluminiumorganischen Elektrolyten wird die Galvanisierwanne gasdicht abschließbar ausgeführt und der oberhalb des Elektrolytspiegels liegende Raum mit einem Inertgas beaufschlagt, während die Eingangsstation und die Ausgangsstation zusätzlich mit Flüssigkeitsschleusen ausgerüstet werden.

Beim Massengalvanisieren muß das schüttfähige Galvanisiergut während der galvanischen Bearbeitung so zusammengehalten werden, daß jedes Einzelteil elektrischen Kontakt hat. Das Galvanisiergut soll andererseits so weit ausgebreitet werden wie möglich, damit die Metallabscheidung auf einer großen Warenoberfläche erfolgen kann und eine möglichst gleichmäßige Stromdichte auf allen Teilen gewährleistet ist. Eine weitere wesentliche Voraussetzung für die Erzielung einwandfreier Metallüberzüge mit einer gleichmäßigen Schichtdicke ist die ausreichende Durchmischung des Galvanisiergutes während der galvanischen Bearbeitung. In sogenannten Einhänge-Galvanisiergeräten wird dies durch die Übertragung einer oszillierenden Drehbewegung auf das mit dem Galvanisiergut gefüllte und in den Elektrolyten eingetauchte Warengefäß erreicht (Zeitschrift "Galvanotechnik" 75, 1984, Nr. 11, Seite 1399). Durch die Schwingbewegungen des Warengefäßes wird gleichzeitig auch noch der Elektrolytaustausch verbessert. Bei Einrichtungen mit Galvanisiertrommel genügt zur Warenbewegung und durch Mischung des Galvanisiergutes das Drehen der Trommel, durch welches je nach Form und Wandreibung die einzelnen Teile mehr oder weniger weit nach oben gefördert werden und dann wieder nach unten abrollen oder abgleiten. Einrichtungen für das Massengalvanisieren sollten ferner mit Fördermitteln für den Transport des Galvanisiergutes durch den Elektrolyten ausgerüstet sein, durch welche in Verbindung mit entsprechenden Ein- und Ausgangsstationen eine kontinuierliche oder auch intervallmäßige Eindosierung und Entnahme des Galvanisiergutes ermöglicht wird. Schließlich sollten sowohl die Warenbewegung und Durchmischung als auch der Transport des Galvanisiergutes durch den Elektrolyten so vorgenommen werden, daß eine schonende Behandlung des Galvanisiergutes gewährleistet ist und auch empfindliche Teile während der galvanischen Bearbeitung nicht mechanisch geschädigt werden.

Eine aus der US-A-3 649 490 bekannte Einrichtung zur elektrolytischen Oberflächenbehandlung von schüttfähigem Gut erfüllt die vorstehend aufgeführten Forderungen weitgehend. Für den Transport des Galvanisiergutes durch den Elektrolyten ist bei dieser bekannten Einrichtung ein Schwingförderer mit wendelförmig nach oben geführter Förderbahn vorgesehen. Die an einer zentralen Tragsäule befestigte und von oben in das Behandlungsbad eingehängte wendelförmige Förderbahn kann jedoch aus konstruktiven Gründen und aus Festigkeitsgründen nur mit einer begrenzten Länge realisiert werden. Aus diesem Grunde sind die Verweilzeiten des schüttfähigen Gutes im Behandlungsbad in vielen Anwendungsfällen der elektrolytischen Oberflächenbehandlung zu kurz.

Aus der US-PS-4 253 916 ist eine Galvanisiereinrichtung für schüttfähiges Gut bekannt, bei welcher die ringförmig ausgebildete Wanne in Schwingungen versetzt wird und dadurch das Gut auf dem wendelförmigen Boden der Wanne dauernd in Bewegung gehalten wird. Bei dieser Galvanisiereinrichtung kann die Verweilzeit des Gutes im Behandlungsbad den jeweiligen Erfordernissen angepaßt werden. Da die Wanne zusammen mit dem darin enthaltenen Behandlungsbad und dem schüttfähigen Gut in Schwingungen versetzt werden muß, ist jedoch nur eine geringe Baugröße mit entsprechend geringem Durchsatz realisierbar.

Aus der CH-A-594 072 ist eine andere Galvanisiereinrichtung für schüttfähiges Gut bekannt, bei welcher die galvanische Metallabscheidung auf einer im Behandlungsbad angeordneten wendelförmigen Rampe vorgenommen wird, welche mit Hilfe eines Vibrators in Schwingungen versetzt wird. Die oberen Gänge der Rampe dienen als reiner Wendelförderer, welcher das Gut zur besseren Durchmischung nach oben transportiert, so daß es wieder auf die Rampe zurückfallen kann. Da der Platz auf der wendelförmigen Rampe eng begrenzt ist, ergibt sich auch nur ein geringer Durchsatz. Außerdem ist die Entnahme der fertig galvanisierten Teile von der Rampe mit einem erheblichen Aufwand verbunden.

Aus der FR-A-1 201 213 ist eine weitere Einrichtung zur elektrolytischen Oberflächenbehandlung von schüttfähigem Gut mit einem in einer Wanne aufgenommenen Behandlungsbad bekannt, durch welches das schüttfähige Gut mit Hilfe mindestens eines Schwingförderers mit drei parallel angeordneten und wendelförmig nach oben führenden Förderbahnen transportierbar ist. Am Ende der ersten Förderbahn befindet sich ein Fallrohr, welches das schüttfähige Gut dann in den Anfangsbereich der zweiten Förderbahn transportiert. In gleicher Weise befindet sich auch am Ende der zweiten Förderbahn ein weiteres Fallrohr, welches das schüttfähige Gut dann in den Anfangsbereich der dritten Förderbahn transportiert. Bei dieser bekannten Einrichtung wird also bei gleicher Bauhöhe die Gesamtlänge der Förderbahn auf den dreifachen Wert gesteigert.

Die im Zusammenhang mit dem Massengalvanisieren aufgeführten Probleme treten auch in gleicher oder zumindest in analoger Weise bei anderen Prozessen zur elektrolytischen Oberflächenbehandlung von schüttfähigem Gut auf, wobei als Beispiele für derartige Prozesse das elektrolytische Beizen in Säuren oder Laugen, das elektrolytische Entfetten in alkalischen Bädern oder das elektrolytische Polieren genannt werden können. Das schüttfähige Gut wird dabei je nach Art der elektrolytischen Oberflächenbehandlung entweder als Kathode oder als Anode geschaltet, wobei die Schaltung als Anode beispielsweise beim elektrolytischen Polieren angewandt wird.

Der Erfindung liegt die Aufgabe zugrunde, eine Einrichtung der eingangs genannten Art so zu verbessern, daß bei ausreichend hohem Durchsatz die Verweilzeiten an die jeweiligen Erfordernisse angepaßt werden können und dabei eine einfache Entnahme des fertig galvanisierten Gutes aus dem Behandlungsbad gewährleistet ist.

Die Lösung dieser Aufgabe erfolgt durch eine gattungsgemäße Einrichtung mit

- einer Wanne zur Aufnahme eines Behandlungsbades,
- mindestens einer in dem Behandlungsbad angeordneten Elektrode mit der entgegengesetzten Polarität des anodisch oder kathodisch kontaktierten Gutes,

- mindestens einem Schwingförderer mit wendelförmig nach oben geführter Förderbahn für den Transport des Gutes durch das Behandlungsbad und mit
- einer Einrichtung zum Rückführen und Austragen, welche das Gut wahlweise zurück in das Behandlungsbad und aus dem Behandlungsbad heraus führt.

Bei angeschlossener Rückführeinrichtung kann das Gut also bei sehr guter Durchmischung so lange im Umlaufbetrieb einer elektrolytischen Oberflächenbehandlung unterzogen werden, bis der gewünschte Erfolg eingetreten ist. Anschließend wird die Rückführeinrichtung abgekoppelt, so daß das fertig behandelte Gut auf normalem Wege ausgetragen werden kann.

Die Umstellung zwischen Umlauf und Austrag ist besonders einfach zu bewerkstelligen, wenn die Einrichtung zum Rückführen und Austragen eine sich an das Ende des Schwingförderers anschließende Weiche umfaßt. In diesem Fall ist es dann auch besonders günstig, wenn die Weiche von einer in das Behandlungsbad zurückführenden Fördereinrichtung auf ein austragsseitiges Fallrohr umstellbar ist.

Ist die Fördereinrichtung als Schwerkraftförderer ausgebildet, so kann auf zusätzliche Fördermittel für die Rückführung verzichtet werden. Auch hier wird der Schwerkraftförderer dann wieder zweckmäßigerweise durch ein Fallrohr gebildet, welches außerdem bei schonender Behandlung des Gutes dessen Durchmischung noch weiter verbessert.

Bei der Verwendung einer Einrichtung zum Rückführen und Austragen ist vorzugsweise vorgesehen, daß der Spiegel des Behandlungsbades nach Beendigung eines Umlaufbetriebes auf ein niedrigeres Niveau absenkbar ist. Hierdurch kann der gesamte Förderweg des Schwingförderers für die elektrolytische Oberflächenbehandlung ausgenutzt werden. Nach dem Absenken des Elektrolyten beginnt dann die Austragsphase, in welcher oberhalb des abgesenkten Badspiegels die an dem Gut anhaftenden Elektrolyttropfen durch die Schwingungen der Förderbahn weggeschleudert werden und sich somit nur eine äußerst geringe Verschleppung des Elektrolyten ergibt.

Um bei Verwendung eines austragsseitigen Fallrohres den Austritt des Elektrolyten auf möglichst einfache Weise zu verhindern, ist der Spiegel des Behandlungsbades auf ein unterhalb der oberen Öffnung des austragsseitigen Fallrohres liegenden Niveau absenkbar, wobei die obere Öffnung des austragsseitigen Fallrohres durch einen Deckel verschließbar ist. Die Umstellung zwischen Umlaufbetrieb und Austrag ist in diesem Falle dann besonders einfach zu bewerkstelligen, wenn die Weiche mit dem Öffnungshub des Deckels zur Öffnung des austragsseitigen Fallrohres hin umstellbar ist.

Die Förderbahn des Schwingförderers kann auch - in Förderrichtung gesehen - mindestens eine nach unten führende Stufe aufweisen. Derartige Stufen wirken dann als Stolperstufen, die bei schonender Behandlung des Gutes zu einer weiteren Steigerung der Durchmischung führen.

Gemäß einer weiteren bevorzugten Ausgestaltung der Erfindung ist vorgesehen, daß die Förderbahn des Schwingförderers über den Spiegel des Behandlungsbades hinausgeführt ist. Oberhalb des Badspiegels werden dann die an dem Gut noch anhaftenden Elektrolyttropfen durch die Schwingungen weggeschleudert, so daß sich nur eine äußerst geringe Verschleppung des Elektrolyten ergibt.

Eine erfindungsgemäße Einrichtung kann mit relativ geringem zusätzlichen Aufwand unter Luftabschluß betrieben werden und beispielsweise für das galvanische Abscheiden von Aluminium aus sauerstoff- und wasserfreien, aluminiumorganischen Elektrolyten eingesetzt werden. In diesem Fall ist die Wanne gasdicht verschließbar, während der Raum oberhalb des Behandlungsbades mit einem Inertgas beaufschlagbar ist. Neben den auch in wäßrigen Behandlungsbädern erzielbaren Vorteilen hat der Einsatz eines Schwingförderers als Fördermittel hier insbesondere den zusätzlichen Vorteil, daß keine aus dem Behandlungsbad herausgeführten Antriebswellen abgedichtet werden müssen. Eine derartige Abdichtung rotierender Teile, die beispielsweise bei der Verwendung von Transportbändern und anderen bekannten Fördermitteln erforderlich ist, ist bei den beispielsweise bei aprotischen Badflüssigkeiten gestellten hohen Anforderungen durchaus als problematisch anzusehen. In einer unter Luftabschluß arbeitenden Einrichtung wird außerdem durch die Vibrationen des Schwingförderers ein Einschleppen von Gasen oder Dämpfen über das schüttfähige Gut mit Sicherheit ausgeschlossen.

Ein Ausführungsbeispiel der Erfindung ist in der Zeichnung dargestellt und wird im folgenden näher beschrieben.

Die Zeichnung zeigt in stark vereinfachter schematischer Darstellung eine mit einer wendelförmigen Schwingrinne ausgerüstete Einrichtung zum galvanischen Abscheiden von Aluminium.

Die Zeichnung zeigt eine turmförmige Einrichtung zum galvanischen Abscheiden von Aluminium. In einer unmittelbar auf dem Flur angeordneten und mit Hilfe eines Deckels De3 gasdicht verschlossenen kreiszylindrischen Wanne W3 befindet sich ein aprotischer, sauerstoff- und wasserfreier, aluminiumorganischer Elektrolyt E3. Der oberhalb des Spiegels Sp30 des Elektrolyten E3 liegende Bereich der Wanne W3 wird mit einem Inertgas, wie z. B. Stickstoff, beaufschlagt, wobei die Zufuhr dieses Inertgases durch einen Pfeil Ig aufgezeigt ist.

Das zu aluminierende Gut G, bei welchem es sich beispielsweise um Bolzen, Muttern, Schrauben Abstandsbuchsen und dergl. handelt, wird über eine (in der Zeichnung nicht dargestellte) Einfuhrschleuse und ein Fallrohr Fr30 in die Wanne W3 eingebracht und fällt dann auf das untere Ende der Förderbahn F3 eines innerhalb der Wanne W3 angeordneten und insgesamt mit Sf3 bezeichneten Schwingförderers. Auf der als Schwingrinne ausgebildeten und wendelförmig nach oben führender Förderbahn F3 wird das Gut G durch den Elektrolyten E3 nach oben transportiert und fällt dann auf eine als kurze Rinne ausgebildete Weiche We. Auf dem Weg nach oben passiert das Gut G mehrere nach unten führende Stufen St der Förderbahn F3, deren Stufenhöhe so bemessen ist, daß sich das Gut G beim Fallen dreht und eine verbesserte Durchmischung des Gutes G erzielt wird. Bei der dargestellten Stellung der Weiche We gelangt das Gut G in ein als Rückführeinrichtung dienendes Fallrohr Fr32, welches das Gut G wieder zum untersten Gang der Förderbahn F3 zurückführt. Bei der dargestellten Stellung der Weiche We wird das Gut G also im Umlauf durch den Elektrolyten E3 gefördert. Vor einer Umstellung der Weiche We wird der Spiegel Sp30 des Elektrolyten E3 auf ein unteres Niveau Sp3u abgesenkt, welches unterhalb der oberen Öffnung eines zum Austrag des Gutes G nach außen geführten Fallrohres Fr31 liegt. Die Absenkung des Elektrolytspiegels, die in der Zeichnung nicht dargestellt ist, kann beispielsweise über eine Umwälzpumpe und ein mit Inertgas beaufschlagtes Speichergefäß vorgenommen werden. Um bei angehobenem Spiegel Sp30 ein Ausfließen des Elektrolyten E3 durch das austragsseitige Fallrohr Fr31 zu verhindern, ist dessen obere Öffnung durch einen Deckel D verschließbar, wobei das Öffnen und Schließen dieses Deckels D über eine nach außen geführte Betätigungsstange Bs pneumatisch oder hydraulisch vorgenommen werden kann. Die Weiche We ist dabei über ein Koppelglied Kg derart an die Betätigungsstange Bs angelenkt, daß mit dem Öffnungshub des Deckels D eine Umstellung erfolgt und das Gut G dann in das Fallrohr Fr31 fällt und in eine (in der Zeichnung nicht dargestellte) Ausfuhrschleuse gelangt.

Die wendelförmige Förderbahn F3 ist an einer zentrisch angeordneten Tragsäule Ts3 befestigt, deren unteres Ende über eine Tragplatte Tp und mehrere Federn Fd3 schwingungsfähig auf dem Boden der Wanne W3 gelagert ist und deren oberes Ende in dem oberhalb des gehobenen Spiegels Sp30 liegenden Bereich eines Vibrator V3 trägt. Der im Hinblick auf seine Funktion nicht näher dargestellte Vibrator V3 ist dabei über einen Zapfen Z im Deckel De3 drehbar und auch im geringen Umfang heb- und senkbar zentriert.

Das schüttfähige Gut G wird über die Förderbahn F3 kathodisch kontaktiert, wobei die Förderbahn F3 über die Tragsäule Ts3 und nicht dargestellte Anschlußmittel mit dem Minuspol einer äußeren Stromquelle verbunden ist. Eine mit Abstand parallel zur Förderbahn F3 angeordnete wendelförmige Anode A3 ist zur Vereinfachung der zeichnerischen Darstellung lediglich im Bereich der oberen Gänge angedeutet. Die Befestigung der Anode A3, die auch aus mehreren wendelförmigen Segmenten zusammengesetzt sein kann, erfolgt über einen in der Zeichnung ebenfalls nur angedeuteten Anodenträger At3, der über ein Kabel Kb und eine gasdichte und

7

elektrisch isolierende Durchführung Df mit dem Pluspol der äußeren Spannungsquelle verbunden ist.

Oberhalb des abgesenkten Spiegels Sp3u des Elektrolyten E3 ist eine (in der Zeichnung nur angedeutete) Sprüheinrichtung Se3 angeordnet, welche das an einer Kondensationseinrichtung Ke3 kondensierte und in einer Sammelrinne Sr3 aufgefangene Toluol To in der Austragsphase auf das Gut G sprüht und die noch anhaftenden Elektrolytreste abspült.

Die in der Zeichnung dargestellte Einrichtung wird chargenweise mit dem Gut G beschickt und so lange im Umlauf betrieben, bis die Aluminiumabscheidung die gewünschte Schichtdicke erreicht hat. Danach wird der Elektrolyt E3 auf den unteren Spiegel Sp3u abgesenkt, die Weiche We bei gleichzweitiger Öffnung des Deckels D umgestellt und das fertig aluminierte und mit Hilfe der Sprüheinrichtung Se3 gereinigte Gut G ausgetragen. Durch den Umlaufbetrieb können dabei wesentlich geringere Bauhöhen als bei den bekannten Einrichtungen realisiert werden.

**Patentansprüche**

1. Einrichtung zur elektrolytischen Oberflächenbehandlung von schüttfähigem Gut (G), insbesondere zum galvanischen Abscheiden von Aluminium aus aprotischen, sauerstoff- und wasserfreien, aluminiumorganischen Elektrolyten (E3) mit

- einer Wanne (W3) zur Aufnahme eines Behandlungsbades,
- mindestens einer in dem Behandlungsbad angeordneten Elektrode mit der entgegengesetzten Polarität des anodisch oder kathodisch kontaktierten Gutes (G),
- mindestens einem Schwingförderer (Sf3) mit wendelförmig nach oben geführter Förderbahn (F3) für den Transport des Gutes (G) durch das Behandlungsbad und mit
- einer Einrichtung (Fr31, Fr32, We) zum Rückführen und Austragen, welche das Gut (G) wahlweise zurück in das Behandlungsbad und aus dem Behandlungsbad heraus führt.

2. Einrichtung nach Anspruch 1 *dadurch gekennzeichnet*, daß die Einrichtung (Fr31, Fr32, We) zum Rückführen und Austragen eines sich an das Ende des Schwingförderers (Sf3) anschließende Weiche (We) umfaßt.

3. Einrichtung nach Anspruch 2, *dadurch gekennzeichnet*, daß die Weiche (We) von einer in das Behandlungsbad zurückführenden Fördereinrichtung auf ein austragsseitiges Fallrohr (Fr31) umstellbar ist.

4. Einrichtung nach Anspruch 3, *dadurch gekennzeichnet*, daß die Fördereinrichtung als Schwerkraftförderer ausgebildet ist.

8

5. Einrichtung nach Anspruch 4, *dadurch gekennzeichnet*, daß der Schwerkraftförderer durch ein Fallrohr (Fr32) gebildet ist.

6. Einrichtung nach einem der Ansprüche 1 bis 5, *dadurch gekennzeichnet*, daß der Spiegel (Sp30) des Behandlungsbades auf ein niedrigeres Niveau (Sp30) absenkbar ist.

7. Einrichtung nach den Ansprüchen 3 und 6, *dadurch gekennzeichnet*, daß der Spiegel (Sp30) des Behandlungsbades auf ein unterhalb der oberen Öffnung des austragsseitigen Fallrohres (Fr31) liegendes Niveau (Sp30) absenkbar ist, wobei die obere Öffnung des austragsseitigen Fallrohres (Fr31) durch einen Deckel (D) verschließbar ist.

8. Einrichtung nach den Ansprüchen 2 und 7, *dadurch gekennzeichnet*, daß die Weiche (We) mit dem Öffnungshub des Deckels (D) zur Öffnung des austragsseitigen Fallrohres (Fr31) hin umstellbar ist.

9. Einrichtung nach einem der vorhergehenden Ansprüche, *dadurch gekennzeichnet*, daß die Förderbahn (F3) des Schwingförderers (Sf3) in Förderrichtung gesehen mindestens eine nach unten führende Stufe (St) aufweist.

10. Einrichtung nach einem der vorhergehenden Ansprüche, *dadurch gekennzeichnet*, daß die Förderbahn (F3) des Schwingförderers (Sf3) über den Spiegel (Sp30) des Behandlungsbades hinausgeführt ist.

11. Einrichtung nach einem der vorhergehenden Ansprüche, *dadurch gekennzeichnet*, daß die Wanne (W3) gasdicht verschließbar ist und daß der Raum oberhalb des Behandlungsbades mit einem Inertgas (Ig) beaufschlagbar ist.

**Claims**

1. Apparatus for the electrolytic surface treatment of bulk goods (G), in particular for the electrode deposition of aluminium from aprotic, oxygen-free and water-free organoaluminium electrolytes (E3) comprising

- a tank (W3) for receiving a treatment bath,
- at least one electrode, disposed in the treatment bath, having the opposite polarity to the anodically or cathodically contacted goods (G),
- at least one vibrator conveyor (Sf3) having a conveyor track (F3) helically routed upward for transporting the goods (G) through the treatment bath, and having
- an apparatus (Fr31, Fr32, We) for returning and discharging, which returns the goods (G) to the treatment bath and removes them from the treatment bath, as desired.

2. Apparatus according to Claim 1, characterized in that the apparatus (Fr31, Fr32, We) for returning and discharging comprises a separator (We) adjacent to the end of the vibrator conveyor (Sf3).

3. Apparatus according to Claim 2, characterized in that the separator (We) can be changed over from a conveyor apparatus which returns to the treatment bath to a down pipe (Fr31) on the discharge side.

4. Apparatus according to Claim 3, characterized in that the conveyor apparatus is constructed as a gravity conveyor.

5. Apparatus according to Claim 4, characterized in that the gravity conveyor is formed by a down pipe (Fr32).

6. Apparatus according to one of Claims 1 to 5, characterized in that the level (Sp30) of the treatment bath can be lowered to a lower level (Sp30).

7. Apparatus according to Claims 3 and 6, characterized in that the level (Sp30) of the treatment bath can be lowered to a level (Sp30) situated below the upper opening of the down pipe (Fr31) on the discharge side, the upper opening of the down pipe (Fr31) on the discharge side being capable of closure by a cover (D).

8. Apparatus according to Claims 2 and 7, characterized in that the separator (We) can be changed over to the opening of the down pipe (Fr31) on the discharge side with the opening movement of the cover (D).

9. Apparatus according to one of the preceding Claims, characterized in that the conveyor track (F3) of the vibrator conveyor (Sf3) has at least one downwardly routed step (St) viewed in the conveying direction.

10. Apparatus according to one of the preceding Claims, characterized in that the conveyor track (F3) of the vibrator conveyor (Sf3) is brought out above the level (Sp30) of the treatment bath.

11. Apparatus according to one of the preceding Claims, characterized in that the tank (W3) can be sealed in a gas-tight manner and in that an inert gas (Ig) can be admitted to the space above the treatment bath.

**Revendications**

1. Dispositif pour le traitement électrolytique superficiel d'objets en vrac (G), notamment pour réaliser le dépôt galvanique d'aluminium à partir d'électrolytes (E3) aprotiques, alumino-organiques, exempts d'oxygène et d'eau, comportant

- une cuve (W3) servant à contenir le bain de traitement,

- au moins une électrode disposée dans le bain de traitement et possédant la polarité opposée à celle des objets (G) contactés par voie anodique ou cathodique,

- au moins un convoyeur oscillant (Sf3) comportant un trajet hélicoïdal d'entraînement montant (F3) pour le transport des objets (G) à travers le bain de traitement, et

- un dispositif (Fr31, Fr32, We) pour le renvoi et le déchargement, qui au choix renvoie les objets (G) dans le bain de traitement ou les en extrait.

2. Dispositif suivant la revendication 1, caractérisé par le fait que le dispositif (Fr31, Fr32, We) de renvoi et de déchargement comporte un aiguillage (We), qui se raccorde à l'extrémité du convoyeur oscillant (Sf3).

3. Dispositif suivant la revendication 2, caractérisé par le fait que l'aiguillage (We) peut être déplacé entre un dispositif d'entraînement, qui revient au bain de traitement, et un tube de descente (Fr31) situé sur le côté de déchargement.

4. Dispositif suivant la revendication 3, caractérisé par le fait que le dispositif d'entraînement est agencé sous la forme d'un convoyeur à gravité.

5. Dispositif suivant la revendication 4, caractérisé par le fait que le convoyeur à gravité est formé par un tube de chute (Fr31).

6. Dispositif suivant l'une des revendications 1 à 5, caractérisé par le fait que la surface (Sp30) du bain de traitement peut être abaissée à un niveau inférieur (Sp30).

7. Dispositif suivant les revendications 3 et 6, caractérisé par le fait que la surface (Sp30) du bain de traitement peut être abaissée à un niveau (Sp30) situé au-dessous de l'ouverture supérieure du tube de chute (Fr31) situé sur le côté de déchargement, l'ouverture supérieure du tube de chute (Fr31) situé sur le côté de déchargement pouvant être fermée par un couvercle (D).

8. Dispositif suivant les revendications 2 et 7, caractérisé par le fait que l'aiguillage (We) peut être déplacé, au moyen de la course de l'ouverture du couvercle (D), en direction de l'ouverture du tube de chute (Fr31) situé sur le côté de déchargement.

9. Dispositif suivant l'une des revendications précédentes, caractérisé par le fait que le trajet d'entraînement (F3) du convoyeur oscillant (Sf3) comporte, lorsqu'on regarde dans la direction d'entraînement, au moins une partie descendante étagée (St).

10. Dispositif suivant l'une des revendications précédentes, caractérisé par le fait que le trajet d'entraînement (F3) du convoyeur oscillant (Sf3) sort au-dessus de la surface (Sp30) du bain de traitement.

11. Dispositif suivant l'une des revendications précédentes, caractérisé par le fait que la cuve (W3) peut être fermée d'une manière étanche aux gaz et que l'espace situé au-dessus du bain de traitement peut être chargé avec un gaz inerte (Ig).